# EUROPÄISCHE PATENTSCHRIFT

(11) **EP 3 849 863 B1**
(45) Veröffentlichungstag und Bekanntmachung des Hinweises auf die Patenterteilung: **26.04.2023**
(21) Anmeldenummer: 19762382.0
(22) Anmeldetag: 02.09.2019
(51) Int. Cl.: B60T 13/36, B60T 17/16

(54) **BREMSZYLINDER MIT EINER VERRIEGELUNGSVORRICHTUNG ZUR MECHANISCHEN BREMSKRAFTVERRIEGELUNG**
BRAKE CYLINDER WITH LOCKING DEVICE FOR MECHANICALLY LOCKING THE BRAKE FORCE
CYLINDRE DE FREIN AVEC UN DISPOSITIF DE VERROUILLAGE POUR VERROUILLER MÉCHANIQUEMENT L'EFFORT DE FREINAGE

(30) Priorität: 14.09.2018 DE 102018122519
(43) Veröffentlichungstag der Anmeldung: 21.07.2021
(73) Patentinhaber: KNORR-BREMSE Systeme für Schienenfahrzeuge GmbH, 80809 München (DE)
(72) Erfinder: ELSTORPFF, Marc-Gregory, 80368 München (DE); HECHT, Ferdinand, 85258 Weichs (DE); NIEPALA, Tomasz, 85375 Neufahrn (DE); MESHENBERG, Jury, 85757 Karlsfeld (DE)
(86) Internationale Anmeldenummer: PCT/EP2019/073371
(87) Internationale Veröffentlichungsnummer: WO 2020/053022

(56) Entgegenhaltungen:
- EP-B1- 2 826 684
- WO-A1-2014/042031
- US-A1- 2016 144 843

## Beschreibung

Die Erfindung betrifft einen Bremszylinder mit einer Verriegelungsvorrichtung zur mechanischen Bremskraftverriegelung nach dem Oberbegriff des Anspruchs 1.

Um das Wegrollen von abgestellten Schienenfahrzeugen unter allen Umständen zu verhindern, muss die Feststellbremse eine entsprechend hohe Bremskraft auch ohne externe Energieversorgung sicherstellen.

Muss ein derart abgestelltes Schienenfahrzeug abgeschleppt werden, so steht oftmals keine Druckluftversorgung für dieses Fahrzeug zur Verfügung, mit welcher eine Arretierung gelöst werden kann. Für diesen Fall muss die Feststellbremse mit einer entsprechenden mechanischen Löseeinrichtung ausgestattet sein (Notlöse- oder Hilfslöseeinrichtung), durch welche die Feststellbremse von Hand, d.h. ohne Nutzung von Fremdenergie gelöst werden kann. Die mechanische Löseeinrichtung wird auch dazu genutzt, um beim Bremsbelagwechsel die Zange sicher kraftfrei zu machen. Ein Wechseln der Bremsbeläge bei pneumatisch gelöstem Federspeicher ist nicht zulässig, da ein ungewolltes Anlegen der Bremse durch Druckabfall ein zu hohes Sicherheitsrisiko für das Servicepersonal darstellt.

Das Dokument EP 2826684 B1 beschreibt einen Bremszylinder für Schienenfahrzeuge, bei welchem die Feststellbremse durch die Blockierung der Betriebsbremse realisiert wird. Hierbei ist die Blockiervorrichtung innerhalb des Betriebsbremsendruckraumes angeordnet. Bei einem derartigen Bremszylinder zur mechanischen Bremskraftverriegelung ist eine manuelle Notlöseeinrichtung erforderlich, die im drucklosen Zustand den Kraftschluss im Arretiermechanismus unterbricht und dadurch die Parkbremse löst. Es wird eine Ausführung beschrieben, bei der die Notlöseeinrichtung unmittelbar auf den Steuerkolben wirkt. Als nachteilig wird hierbei angesehen, dass in dieser Ausführung der Notlösezustand nicht dauerhaft verriegelt wird, wodurch nicht sichergestellt ist, dass der Lösevorgang abgeschlossen ist bevor der Arretiermechanismus wieder eingreift.

In dem Dokument EP 2826684 B1 ist eine weitere Ausführung beschrieben, in welcher der Notlösezustand dauerhaft verriegelt und solange gehalten wird, bis ein Steuerkolben den Arretiermechanismus zurücksetzt. In der gezeigten Ausführung befindet sich der Notlösestift im Kraftfluss der Kolbenkraft. Dabei scheint es nachteilig, dass in Folge der Reibung an dem Notlösestift bei dieser Ausführung eine hohe Notlösekraft erforderlich ist.

Daher besteht die Aufgabe der Erfindung darin, einen verbesserten Bremszylinder mit einer verbesserten Verriegelungsvorrichtung zur mechanischen Bremskraftverriegelung bereitzustellen.

Die Aufgabe wird durch einen Bremszylinder mit den Merkmalen des Anspruchs 1 gelöst.

Ein Erfindungsgedanke besteht darin, dass das Steuerorgan und das Notlöseorgan sowohl funktionell getrennt als auch die Notlöseverriegelung außerhalb des Kraftflusses angeordnet ist. Um den Notlösezustand zu verriegeln, kommt ein sogenannter Sperrstift als Verriegelungselement zum Einsatz. Dieses Verriegelungselement verriegelt das Notlöseorgan solange, bis das Verriegelungselement von dem Steuerorgan betätigt und der Notlösezustand dadurch rückgesetzt wird.

Ein erfindungsgemäßer Bremszylinder mit einer Verriegelungsvorrichtung zur mechanischen Bremskraftverriegelung, insbesondere für Schienenfahrzeuge, und mit einem innerhalb eines Gehäuses axial bewegbaren Betriebsbremskolben, der durch Beaufschlagung mit einem Druckmedium bewegbar und mit einem Kolbenrohr gekoppelt ist, wobei das Kolbenrohr mit einem nicht selbsthemmenden Gewinde, das in Eingriff mit einer in dem Gehäuse drehbar gelagerten Gewindemutter steht, ausgebildet ist, wobei die Verriegelungsvorrichtung mit einer Verzahnung der Gewindemutter zusammenwirkt, ist so ausgebildet, dass die Verriegelungsvorrichtung eine oder mehrere Sperrklinken, einen Steuerkolben, einen Notlösestößel und ein Verriegelungselement des Notlösestößels umfasst.

Auf diese Weise erfüllt der Bremszylinder bei Verwendung in einer Bremse von Schienenfahrzeugen vorteilhaft die nachfolgenden Kriterien:
- Sicherung des Fahrzeugs gegen unbeabsichtigtes Wegrollen
- Dauerhafte Sicherstellung der erforderlichen Feststellkraft
- Zugweite Aktivierung / Deaktivierung von verschiedenen Führerständen des Fahrzeugs
- Manuelle Deaktivierung (Notlösen) der Parkbremse bei Verlust der regulären Betätigungsenergie

Diese Kriterien werden von dem erfindungsgemäßen Bremszylinder vorteilhaft erfüllt, indem die bestehende Betriebsbremse eingelegt und mechanisch arretiert wird. Der Arretierungsmechanismus wird dabei durch den sogenannten Steuerdruck geschaltet. Bei dieser Art von Feststellbremse wird die manuelle Deaktivierung der Parkbremse (Notgelöster Zustand) dauerhaft gehalten, um sicherzustellen, dass der Notlösevorgang vollständig abgelaufen ist, bevor der Arretiermechanismus wieder eingreift. Erst durch erneute Steuerdruckbeaufschlagung wird der notgelöste Zustand aufgehoben werden.

Es ergeben sich die besonderen Vorteile, dass die Notlösevorrichtung dauerhaft verriegelt werden kann, wodurch sichergestellt ist, dass der Notlösevorgang vollständig ablaufen kann. Zudem liegt die Notlösebetätigung nicht im Kraftfluss der Parkbremse, wodurch sich geringere Notlösekräfte und somit weniger Verschleiß ergeben.

In besonders bevorzugter Ausführung sind der Steuerkolben und der Notlösestößel parallel zueinander und dicht nebeneinander angeordnet, wobei eine Steuerachse des Steuerkolbens und eine Notlöseachse des Notlösestößels parallel zueinander und rechtwinklig zu einer Kolbenachse des Bremszylinders verlaufen. Dies ist vorteilhaft, da einerseits diese Steuerelemente nicht im Kraftfluss des Betriebsbremskolbens liegen und andererseits ein kompakter Aufbau erzielt werden kann.

Es ist vorteilhaft, wenn eine Längsachse des Verriegelungselementes als Sperrelementachse rechtwinklig zu der Steuerachse des Steuerkolbens und der Notlöseachse des Notlösestößels verläuft und die Steuerachse des Steuerkolbens und die Notlöseachse des Notlösestößels schneidet, da so ein Platzbedarf gering bleibt.

In einer weiteren Ausführung ist vorgesehen, dass das Verriegelungselement in Richtung seiner Verriegelungselementachse verschiebbar in einem Sperrblock des Notlösestößels und einer Aufnahme eines Halteabschnitts eines Gehäuses des Bremszylinders geführt und durch eine Feder in Richtung auf den Steuerkolben vorgespannt ist. So lässt sich eine Anzahl von Bauteilen vorteilhaft reduzieren.

In einer noch weiteren Ausführung steht eine Steuerfläche eines konischen Steuerkörpers des Steuerkolbens in Kontakt mit einem Steuerabschnitt des Verriegelungselementes. Ein besonderer Vorteil besteht hier in der kompakten Ausführung und der Mehrfachfunktion des Steuerkolbens.

Dabei ist es besonders vorteilhaft, wenn das Verriegelungselement durch den Kontakt seines Steuerabschnitts mit der Steuerfläche des konischen Steuerkörpers des Steuerkolbens in der Richtung seiner Verriegelungselementachse in Abhängigkeit von der Position des Steuerkolbens aus einer ersten Position, in der das Verriegelungselement den Notlösestößel axial verriegelt, in eine zweite Position, in der das Verriegelungselement den Notlösestößel axial entriegelt, und zurück verstellbar ist. Somit können mehrere Funktionen mit sehr geringem Platzbedarf verwirklicht werden.

In einer noch weiteren Ausführung weist das Verriegelungselement einen Sperrabschnitt auf, welcher in der ersten Position des Verriegelungselementes mit einer Stufe eines Sperrblocks des Notlösestößels in einem verriegelten Zustand des Notlösestößels in Eingriff steht und den Notlösestößel axial verriegelt. Dies ist vorteilhaft, da so der Notlösestößel mehrere Funktionen realisieren kann.

In einer Ausführung ist die mehreren Sperrklinken in Bezug auf eine Kolbenachse, zu welcher die Gewindemutter koaxial angeordnet ist, an der Verzahnung der Gewindemutter radial gegenüberliegend angeordnet. Dies ergibt einen vorteilhaft geringen Bauraum.

Weiterhin ist es vorgesehen, dass die mehreren Sperrklinken gleichzeitig durch sowohl den Steuerkolben als auch durch den Notlösestößel betätigbar sind. Das reduziert die Anzahl von Bauteilen und spart Einbauraum.

Eine weitere Ausführung sieht vor, dass die Verriegelungsvorrichtung aus einem Arretierungszustand, in welchem die eine oder mehreren Sperrklinken durch einen Eingriff mit der Verzahnung der Gewindemutter deren Verdrehung um die Kolbenachse blockieren, in einen Lösezustand, in welchem die Sperrklinken außer Eingriff mit der Verzahnung der Gewindemutter stehen und die Gewindemutter in ihrer Verdrehung nicht blockieren, mittels des Steuerkolbens und/oder des Notlösestößels verstellbar ist, wobei die Verriegelungsvorrichtung aus dem Lösezustand in den Arretierungszustand mittels des Steuerkolbens verstellbar ist, wenn der Steuerkolben nach Beaufschlagung mit Druck anschließend wieder entlüftet wird, oder im Falle des Notlösestößels dieser aus seiner Löseposition in seine Ruheposition zurückgestellt ist. Damit wird eine vorteilhafte Steuerung und Betätigung auch für einen Notlösefall ermöglicht.

Wobei in dem Arretierungszustand die mehreren Sperrklinken jeweils mittels einer Feder in Eingriff mit der Verzahnung der Gewindemutter gedrückt sind, und wobei in dem Lösezustand die Verriegelungsvorrichtung durch Beaufschlagen des Steuerkolbens mit Steuerdruck in den Lösezustand verstellt ist, oder wobei der Notlösestößel mittels Werkzeug und/oder manuell aus einer Ruheposition in eine Löseposition verstellt ist und die mehreren Sperrklinken betätigt.

Es ist zudem vorgesehen, dass die mehreren Sperrklinke/n der Verriegelungsvorrichtung unabhängig voneinander bewegbar sind. Der Vorteil dabei besteht darin, dass die Sperrklinken unabhängig voneinander in Eingriff mit der Verzahnung der Gewindemutter kommen können.

In einer weiteren Ausführung ist der Steuerkolben mit einem Druckmittel beaufschlagbar, und der Notlösestößel ist manuell oder/und mit einem Werkzeug verstellbar. Natürlich kann der Steuerkolben auch mit einem anderen Aktuator, z.B. elektromotorisch oder hydraulisch betätigt werden. Dies ergibt eine vorteilhaft einfache Betätigung.

Ein Ausführungsbeispiel der Erfindung wird nachfolgend anhand der beigefügten Zeichnungen beschrieben.

Es zeigen:
- Fig. 1-2: schematische Längsschnitte eines Ausführungsbeispiels eines erfindungsgemäßen Bremszylinders mit einer Verriegelungsvorrichtung;
- Fig. 2a-2c: vergrößerte Schnittansichten einer Anordnung eines Steuerkolbens und eines Notlösestößels der Verriegelungsvorrichtung des Ausführungsbeispiels nach Fig. 2 in verschiedenen Positionen;
- Fig. 3: einen schematischen Radialschnitt längs einer Schnittlinie III des Bremszylinders nach Fig. 2;
- Fig. 4: einen schematischen Radialschnitt längs einer Schnittlinie IV des Bremszylinders nach Fig. 2; und
- Fig. 5-6: schematische Perspektivansichten der Verriegelungsvorrichtung des Ausführungsbeispiels nach Fig. 1-2.

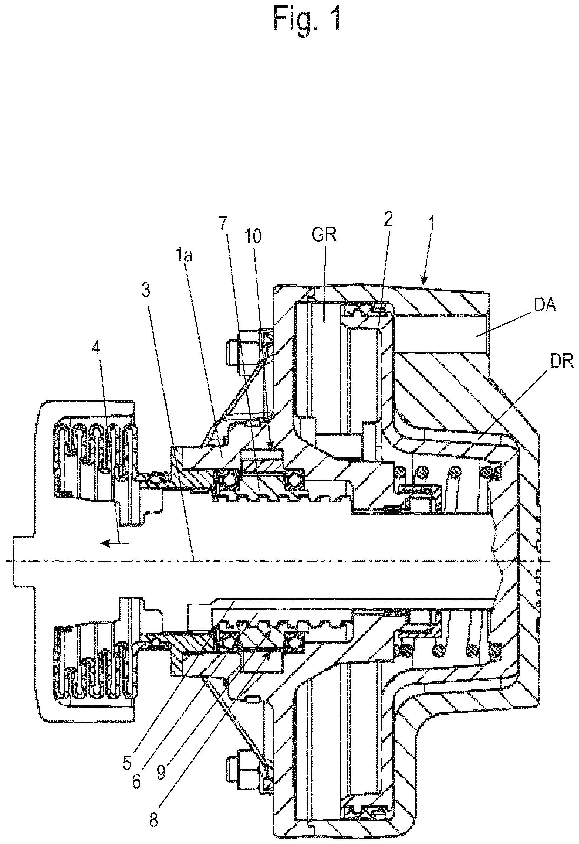

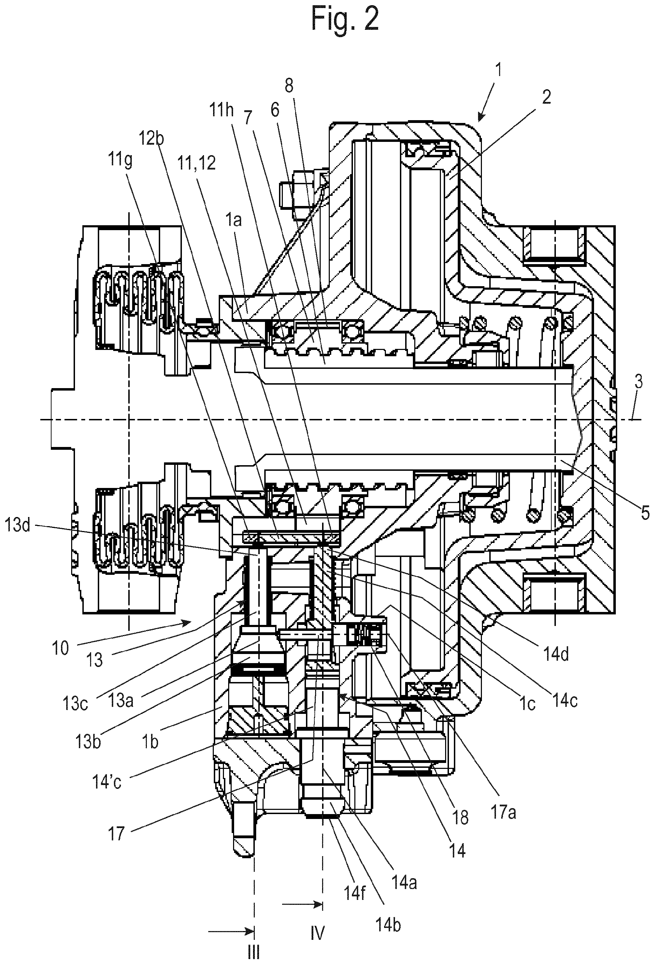

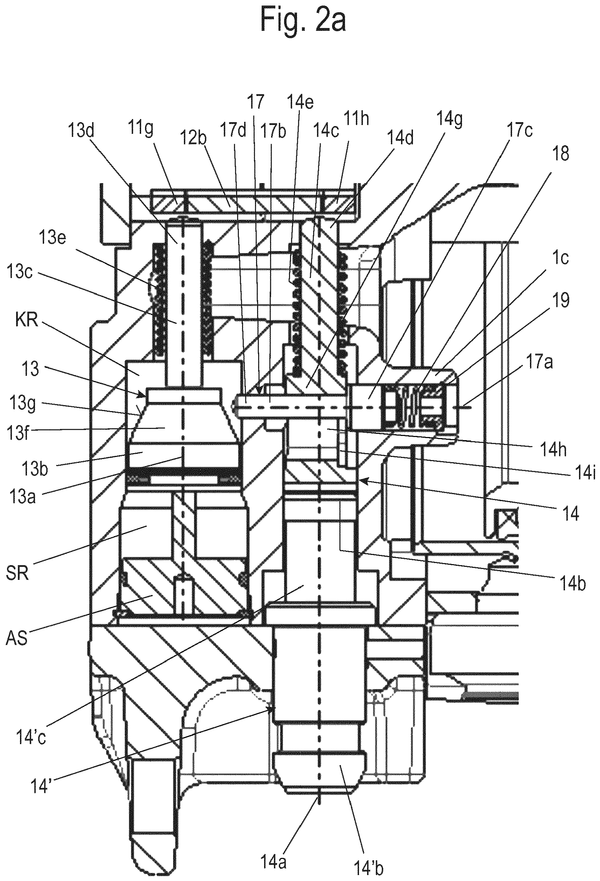

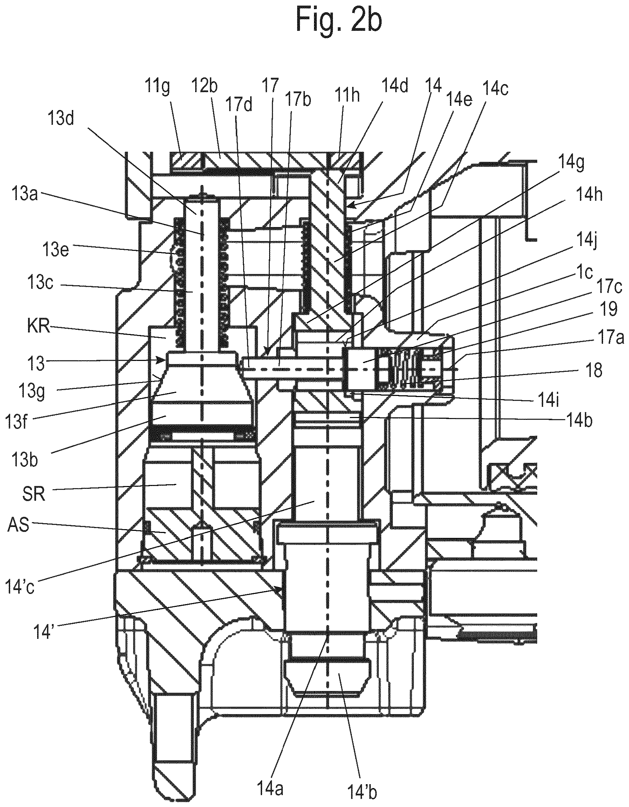

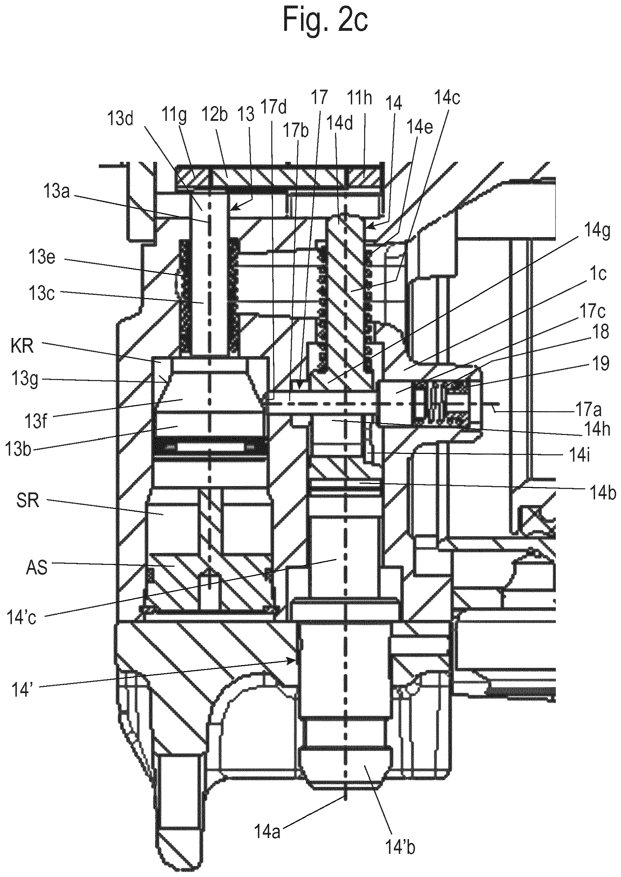

**Figur 1** zeigt einen schematischen Längsschnitt eines ersten Ausführungsbeispiels eines erfindungsgemäßen Bremszylinders 1 mit einer Verriegelungsvorrichtung 10. Die Darstellung in **Figur 2** zeigt den Bremszylinder 1 nach Figur 1 um 90° um eine Kolbenachse 3 gedreht in einem Längsschnitt. **Figur 2a** stellt eine vergrößerte Schnittansicht einer Anordnung eines Steuerkolbens 13 und eines Notlösestößels 14 der Verriegelungsvorrichtung 10 des Ausführungsbeispiels nach Fig. 2 in einer Ruheposition dar. In **Figur 2b** ist die Anordnung des Steuerkolbens 13 und des Notlösestößels 14 in einer Löseposition des Notlösestößels 14 gezeigt. **Figur 2c** zeigt eine Löseposition des Steuerkolbens.

Der Bremszylinder 1 weist die Verriegelungsvorrichtung 10 als mechanische Bremskraftverriegelung auf und ist für den Einsatz bei Schienenfahrzeugen vorgesehen.

Der allgemein bekannte Aufbau und die Funktion des Bremszylinders 1 werden hier nicht weiter im Detail beschrieben.

In einem Gehäuse 1a des Bremszylinders 1 ist ein Gehäuseinnenraum GR angeordnet, in welchem ein Betriebsbremskolben 2 längs einer Kolbenachse 3 in einer Bewegungsrichtung 4 verschiebbar angeordnet ist.

Der Betriebsbremskolben 2 trennt einen Druckraum DR von dem Gehäuseinnenraum GR des Gehäuses 1a ab. Der Druckraum DR ist mit einem Druckanschluss DA verbunden, durch welchen der Druckraum DR mit einem Druckmedium, z.B. Druckluft, und somit der Betriebsbremskolben 2 beaufschlagt werden kann.

Der Betriebsbremskolben 2 ist mit einem Ende eines Kolbenrohres 5 verbunden, welches sich durch das Gehäuse 1a längs der Kolbenachse 3 erstreckt und mit einer nicht gezeigten Kolbenstange verbunden ist. Diese Kolbenstange überträgt bei einem Bremsvorgang eine Bremskraft auf ein (hier nicht dargestelltes) Bremsgestänge eines Schienenfahrzeuges.

Das andere Ende des Kolbenrohres 5 weist einen Gewindeabschnitt 6 mit einem Außengewinde auf, der fest mit dem Kolbenrohr 5 verbunden ist. Das auf dem Kolbenrohr 5 angebrachte Gewinde 9 des Gewindeabschnitts 6 steht in Eingriff mit einem Innengewinde einer in dem Gehäuse 1a gelagerten Gewindemutter 7. Das Gewinde 9 ist nicht selbsthemmend ausgeführt. Die Gewindemutter 7 ist in dem zugehörigen Abschnitt des Gehäuses 1a drehbar um die Kolbenachse 3 gelagert und axial fixiert.

Werden der Druckraum DR des Bremszylinders 1 über den Druckanschluss DA und somit der Betriebsbremskolben 2 mit Druck beaufschlagt, bewegt sich der Betriebsbremskolben 2 zusammen mit dem Kolbenrohr 5 nach in der Bewegungsrichtung 4 (hier in der Figur 1) nach links.

Diese axiale Bewegung des Betriebsbremskolbens 2 und des Kolbenrohres 5 in Richtung der Kolbenachse 3 bewirkt aufgrund des nicht selbsthemmenden Gewindeeingriffs von dem Gewindeabschnitt 6 und der Gewindemutter 7 eine Drehung der Gewindemutter 7 um die Kolbenachse 3. Wird die Drehung der Gewindemutter 7 durch eine Arretierung behindert, wird zugleich die Axialbewegung des Betriebsbremskolbens 2 gesperrt. Eine solche Arretierung wird hier durch die Verriegelungsvorrichtung 10 gebildet, welche mit einer äußeren Verzahnung 8 der Gewindemutter 7 zusammenwirkt.

Die Verriegelungsvorrichtung 10 wird im Weiteren im Zusammenhang mit den Figuren 2, 2a, 2b, 2c, 3 und 4 erläutert.

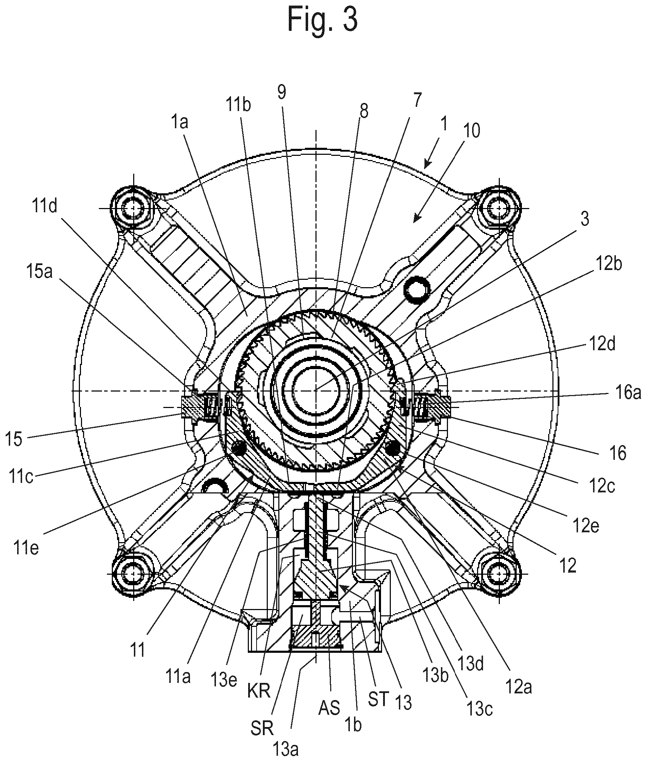

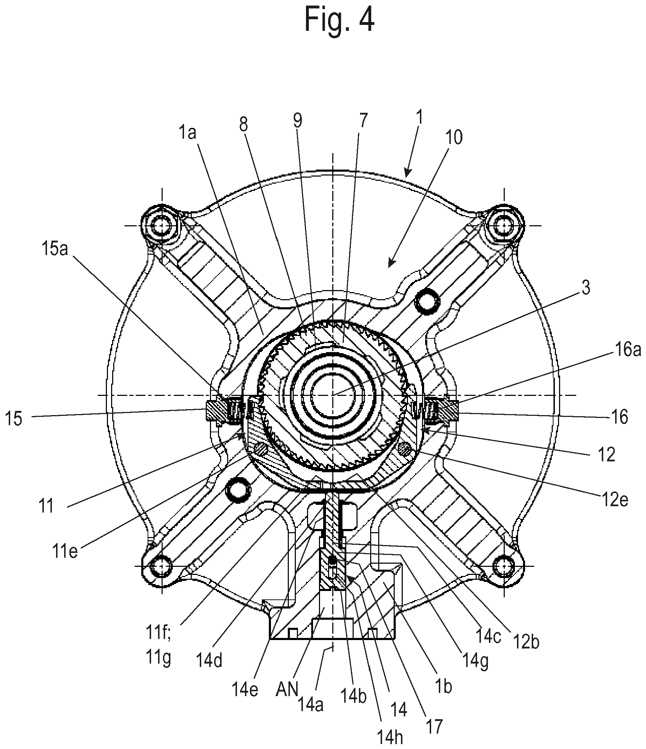

**Figur 3** zeigt einen schematischen Radialschnitt längs einer Schnittlinie III des Bremszylinders 1 nach Figur 2, und in **Figur 4** ist ein schematischer Radialschnitt längs einer Schnittlinie IV des Bremszylinders 1 nach Figur 2 dargestellt.

Die Verriegelungsvorrichtung 10 umfasst in diesem ersten Ausführungsbeispiel den Gewindeabschnitt 6 des Kolbenrohres 5, die Gewindemutter 7, eine erste Sperrklinke 11, eine zweite Sperrklinke 12, einen Steuerkolben 13, einen Notlösestößel 14 und ein Verriegelungselement 17.

Die Sperrklinken 11, 12 bilden hier in Bezug auf die Kolbenachse 3, zu welcher die Gewindemutter 7 koaxial angeordnet ist, radial gegenüberliegend angeordnete Arretierelemente, wirken mit der Verzahnung 8 der Gewindemutter 7 zusammen und werden durch den Steuerkolben 13 und den Notlösestößel 14 betätigt. Sowohl der Steuerkolben 13 als auch der Notlösestößel 14 betätigt dabei beide Sperrklinken 11, 12 gleichzeitig.

Mittels des Steuerkolbens 13 kann die Verriegelungsvorrichtung 10 aus einem Arretierungszustand in einen Lösezustand und zurück (bzw. umgekehrt) verstellt werden. Mittels des Notlösestößels 14 kann die Verriegelungseinrichtung 10 aus dem Arretierungszustand nur in den Lösezustand gebracht werden, umgekehrt ist dies jedoch nicht möglich. Nachdem die Verriegelungsvorrichtung 10 mit Hilfe des Notlösestößels 14 in den Lösezustand verstellt worden ist, kann die Verriegelungsvorrichtung 10 mit dem Notlösestößel 14 nicht mehr in den Arretierungszustand verstellt werden. Nur der Steuerkolben 13 kann bei Beaufschlagung mit Druck und anschließendem Entlüften die Verriegelungsvorrichtung 10 wieder in den Arretierungszustand verstellen.

In dem Arretierungszustand blockieren die Sperrklinken 11, 12 durch einen Eingriff mit der Verzahnung 8 der Gewindemutter 7 deren Verdrehung um die Kolbenachse 3, während die Sperrklinken 11, 12 in dem Lösezustand außer Eingriff mit der Verzahnung 8 der Gewindemutter 7 stehen und diese in ihrer Verdrehung nicht blockiert ist. In den Figuren 3 und 4 ist der Arretierungszustand der Verriegelungsvorrichtung 10 dargestellt, wobei Figur 3 die Betätigung über den Steuerkolben 13 zeigt.

Die Betätigung über den Notlösestößel 14 ist in Figur 2b und 4 gezeigt.

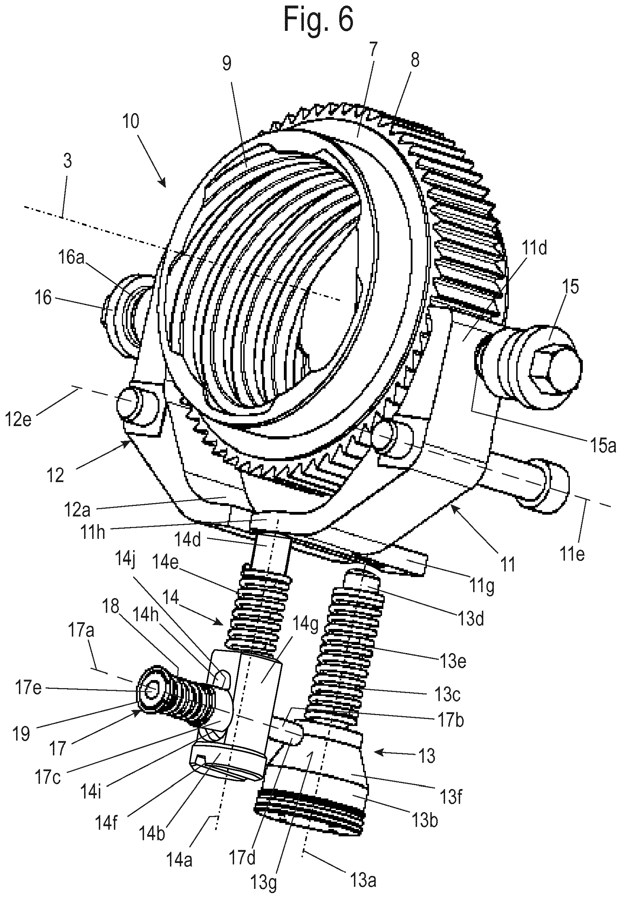

Wird der Notlösestößel 14 betätigt, verriegelt das Verriegelungselement 17 als Sperreinrichtung den Notlösestößel 14 in der gelösten Stellung. Wird der Steuerkolben 13 mit Steuerdruck beaufschlagt, bewegt sich der Steuerkolben 13 (nach oben in Figur 2, 2c, 3, 5, 6) in Richtung auf die Kolbenachse 3, und das Verriegelungselement 17 wird über einen konischen Steuerkörper 13f mit einer Steuerfläche 13g des Steuerkolbens 13 zur Entriegelung des Notlösestößels 14 verschoben. Dadurch wird der Notlösestößel von der Feder 14e in seine Ruhestellung bewegt. Der notgelöste Lösezustand wird auf diese Weise von einem pneumatischen Lösezustand abgelöst, indem der Steuerkolben 13 die Sperrklinken 11, 12 außer Eingriff mit der Verzahnung 8 bringt. Dies wird unten und auch im Zusammenhang mit Figur 6 noch ausführlich beschrieben.

Die Sperrklinken 11, 12 sind als Winkelhebel mit jeweils zwei Hebelarmen 11a, 11c; 12a, 12c ausgebildet und jeweils um eine Schwenkachse 11e, 12e verschwenkbar im Gehäuse 1a angeordnet. Dabei umgreifen die Sperrklinken 11, 12 die Verzahnung 8 der Gewindemutter 7 um etwa mehr als 180° (Figur 3-4). Die Schwenkachsen 11e, 12e verlaufen parallel zueinander und parallel zu der Kolbenachse 3.

Die Sperrklinken 11, 12 umfassen jeweils einen ersten Hebelarm 11a, 12a mit einem Antriebsende 11b, 12b und einen zweiten Hebelarm 11c, 12c mit einem Klinkenende 11d, 12d. Die Klinkenenden 11d, 12d wirken jeweils gegenüberliegend mit Zähnen der Verzahnung 8 der Gewindemutter 7 zusammen dergestalt zusammen, dass sie in dem Arretierungszustand der Verriegelungsvorrichtung 10 mit den zugehörigen Zähnen einen Formschluss wie z.B. bei einem Gesperre bilden. Die Gewindemutter 7 ist dabei mit ihrer Verzahnung 8 ein verzahntes Sperrrad, und die Klinkenenden 11d, 12d der Sperrklinken 11, 12 die jeweiligen Klinken eines solchen Gesperres.

Hier ist die Verzahnung 8 so ausgebildet, dass jeder Zahn eine radiale Flanke und eine geneigte Flanke in Bezug auf die Kolbenachse 3 aufweist. In dem Arretierungszustand der Verriegelungsvorrichtung 10 stehen die jeweiligen radialen Flanken mit radialen Flanken der Klinkenenden 11d, 12d in Kontakt.

Dabei ist ein Klinkenende 11d drückend und das andere Klinkenende 12d ziehend ausgeführt. Dies ist in den Figuren 3-4 zu erkennen. Mit anderen Worten, wenn eine Drehung der Gewindemutter 7 im Gegenuhrzeigersinn um die Kolbenachse 3 in dem Arretierungszustand der Verriegelungsvorrichtung 10 blockiert ist, steht eine radiale Flanke der Verzahnung 8 mit einer radialen Flanke des Klinkenendes 12d so in Kontakt, dass eine Zugkraft auf den zweiten Hebelarm 12c der zweien Sperrklinke 12 übertragen wird. Diese Zugkraft wird über die Lagerung der Schwenkachse 12e der zweiten Sperrklinke 12 in dem Gehäuse 1a in dieses eingeleitet. Somit wirkt das Klinkenende 12d der zweiten Sperrklinke 12 als ein ziehendes Klinkenende 12d.

Auf der radial gegenüberliegenden Seite der Gewindemutter 7 steht auch eine radiale Flanke der Verzahnung 8 mit einer radialen Flanke des Klinkenendes 11d in Kontakt, wobei aber eine Druckkraft von der Verzahnung 8 auf das Klinkenende 11d und den zweiten Hebelarm 11c der ersten Sperrklinke 11 übertragen wird. Diese Druckkraft wird wie bei der zweiten Sperrklinke 12 über die Lagerung der Schwenkachse 11e der ersten Sperrklinke 11 in dem Gehäuse 1a in dieses eingeleitet. Das Klinkenende 11d der ersten Sperrklinke 11 wirkt auf diese Weise als ein drückendes Klinkenende 11d.

Die Klinkenenden 11d, 12d sind um eine halbe Zahnteilung in Bezug auf die Verzahnung 8 der Gewindemutter 7 versetzt zueinander angeordnet und können unabhängig von einander in die Verzahnung 8 einfallen, d.h. mit dieser in Eingriff und entsprechend außer Eingriff kommen.

Die Sperrelemente in Form der Klinkenenden 11d, 12d sind jeweils um eine 1/n Zahnteilung der Verzahnung 8 versetzt zueinander angeordnet, wobei n die Anzahl der Sperrelemente ist. Dadurch kann sich das Zahnrad, d.h. die Verzahnung 8 mit der Gewindemutter 7, maximal um eine 1/n Zahnteilung zurückdrehen, wodurch der Kraftverlust um den Faktor 1/n reduziert wird. Zudem wird die Lastspielzahl der einzelnen Zähne der Verzahnung 8 bzw. der Sperrelemente d.h. Klinkenenden 11d, 12d reduziert, wodurch die Bauteile kompakter ausgelegt werden können.

In dem Arretierungszustand der Verriegelungsvorrichtung 10 sind die Sperrklinken 11, 12 jeweils mittels einer Feder 15a, 16a in Eingriff mit der Verzahnung 8 der Gewindemutter 7 gedrückt. Die Federn 15a, 16a sind jeweils Druckfedern und in einem Federhalter 15, 16 in dem Gehäuse 1a gehalten und stehen jeweils mit dem Klinkenende 11d, 12d der Sperrklinken 11, 12 in Kontakt. Dabei wirkt die Federkraft der Feder 15a auf den zweiten Hebelarm 11c der ersten Sperrklinke 11 derart ein, dass die erste Sperrklinke 11 um ihre Schwenkachse 11e im Uhrzeigersinn (Figur 3-4) verschwenkt wird und das Klinkenende 11d in Eingriff mit der Verzahnung 8 der Gewindemutter kommt. In ähnlicher Weise wirkt die Federkraft der Feder 16a auf den zweiten Hebelarm 12c der zweiten Sperrklinke 12 derart ein, dass die zweite Sperrklinke 12 um ihre Schwenkachse 12e im Gegenuhrzeigersinn (Figur 3-4) verschwenkt wird und das Klinkenende 12d auch in Eingriff mit der Verzahnung 8 der Gewindemutter kommt.

Auf diese Weise wird der Arretierungszustand automatisch eingenommen, wenn keine Betätigung der Sperrklinken 11, 12 durch den Steuerkolben 13 oder/und den Notlösestößel 14 vorliegt.

Der Steuerkolben 13 und der Notlösestößel 14 sind in einem Gehäuseabschnitt 1b verstellbar bzw. verschiebbar angeordnet und stehen mit den Sperrklinken 11, 12 in Zusammenwirkung. Zudem stehen der Steuerkolben 13 und der Notlösestößel 14 in Zusammenwirkung mit einem Verriegelungselement 17 einer Sperreinrichtung. Der Steuerkolben 13 und der Notlösestößel 14 sind zudem parallel zueinander und dicht nebeneinander angeordnet, d.h. eine Steuerachse 13a des Steuerkolbens 13 und eine Notlöseachse 14a des Notlösestößels 14 verlaufen parallel zueinander.

Der Steuerkolben 13 weist die Steuerachse 13a in seiner Längsrichtung, einen Antriebsabschnitt 13b, einen zylindrischen Körper 13c, ein Abtriebsende 13d, eine Feder 13e und einen konischen Steuerkörper 13f mit einer Steuerfläche 13g auf. Der Antriebsabschnitt 13b ist als ein zylindrischer Kolben ausgebildet und in einem Kolbenraum KR in dem Gehäuseabschnitt 1b angeordnet und geführt. Der Kolbenraum KR mündet in einen Steuerdruckraum SR, welcher mit einem Steuerdruckanschluss ST kommuniziert und durch ein Anschlagelement AS verschlossen ist. Eine freie Stirnfläche des Antriebsabschnitts 13b weist in den Steuerdruckraum SR.

Der Antriebsabschnitt 13b geht an seinem andern Ende in den großen Durchmesser des konischen Steuerkörpers 13f über, der sich in Richtung auf die Kolbenachse 3a hin verjüngt. Das verjüngte Ende des konischen Steuerkörpers 13f mit dem kleinen Durchmesser ist mit dem zylindrischen Körper 13c verbunden, dessen freies Ende das Abtriebsende 13d bildet. Der Körper 13c ist zudem im Gehäuse 1b geführt. Die Feder 13e ist eine Druckfeder und umgibt den Körper 13c. Der Steuerkolben 13 ist mittels Druckmedium, z.B. Druckluft, mit welchem der Steuerdruckraum SR beaufschlagt wird, gegen die Kraft der Feder 13e, die sich am Gehäuse 1b abstützt, längs der Steuerachse 13a aus einer Ruheposition in eine Löseposition verstellbar. In der Ruheposition steht die freie Fläche des Antriebsabschnitts 13b mit dem Anschlagelement AS in Kontakt, welches die Ruheposition des Steuerkolbens 13 festlegt.

Die Steuerfläche 13g des konischen Steuerkörpers 13f steht in Kontakt mit einem Steuerabschnitt 17d des Verriegelungselementes 17, dessen Längsachse als Verriegelungselementachse 17a rechtwinklig zu der Steuerachse 13a des Steuerkolbens 13 und der Notlöseachse 14a des Notlösestößels 14 sowie parallel zu der Kolbenachse 3 verläuft und die Steuerachse 13a des Steuerkolbens 13 und die Notlöseachse 14a des Notlösestößels 14 schneidet. Das Verriegelungselement 17 wird unten noch weiter erläutert.

In dem hier beschriebenen Ausführungsbeispiel ist der Notlösestößel 14 zweiteilig ausgeführt und umfasst den Notlösestößel 14 und einen Notlösebetätiger 14'.

Der Notlösestößel 14 und der Notlösebetätiger 14' weisen eine gemeinsame Notlöseachse 14a in ihrer Längsrichtung auf. Der Notlösestößel 14 umfasst weiterhin ein Betätigungsende 14b, einen zylindrischen Körper 14c, ein Abtriebsende 14d, eine Feder 14e und einen Sperrblock 14g. Das Betätigungsende 14b ist in einen Aufnahmeraum AN in dem Gehäuseabschnitt 1b geführt. Eine freie Stirnfläche des Antriebsabschnitts 14b weist zu einer Außenöffnung des Aufnahmeraums AN.

Das andere Ende des Betätigungsabschnitts 14b ist mit dem Sperrblock 14g verbunden. Der Sperrblock 14g weist einen Führungsabschnitt 14h auf, welcher mit dem Verriegelungselement 17 zusammenwirkt. Der Führungsabschnitt 14h ist ein mittiges Durchgangslangloch, das sich in Richtung der Notlöseachse 14a erstreckt und rechtwinklig zu dieser in Richtung der Verriegelungselementachse 17a durchgängig ist. Auf der dem Steuerkolben 13 abgewandten Seite ist der Führungsabschnitt 14h mit einer Stufe 14i versehen, welche durch eine Einformung gebildet ist. Diese Einformung ist hier ein Langloch mit einer Breite, die größer als die Breite des Führungsabschnitts 14h ist. Die Breite dieser Einformung korrespondiert mit einem zylindrischen Sperrabschnitt 17c des Verriegelungselementes 17. Eine Tiefe dieser Einformung in Richtung auf den Steuerkolben 13 hin entspricht etwa einem Viertel der Tiefe des Führungsabschnitts 17h. Auf diese Weise ist die Stufe 14i gebildet, deren zur Kolbenachse 3 weisender Rand einen Anschlag 14j für den zylindrischen Sperrabschnitt 17c des Verriegelungselementes 17 bildet. Dies wird unten noch weiter beschrieben.

An dem zur Kolbenachse 3 weisenden Ende des Sperrblocks 14g ist der zylindrische Körper 14c angebracht, dessen freies Ende das Abtriebsende 14d bildet. Der Körper 14c ist zudem im Gehäuse 1b geführt. Die Feder 14e ist eine Druckfeder und umgibt den Körper 14c. Der Notlösestößel 14 ist mittels eines Werkzeugs, über den Betätigungsabschnitt 14f gegen die Kraft der Feder 14e, die sich am Gehäuse 1b abstützt, längs der Notlöseachse 14a aus einer Ruheposition in eine Notlöseposition verstellbar (z.B. axial verschiebbar). Zwischen dem Betätigungsende 14b und dem Sperrkörper 14g kann ein weiterer Körper 14'c angebracht sein, wie z.B. in Figur 2a gezeigt ist.

In dem in Figur 2, 2a, 2b und 2c gezeigten Beispielen ist der Notlösebetätiger 14' nicht geschnitten dargestellt und umfasst einen Körper 14'c und ein Betätigungsende 14'b, welches aus dem Gehäuse 1b hervorsteht. Das andere Ende des Körpers 14'c steht in Kontakt mit dem Betätigungsende 14b des Notlösestößels 14. Der Notlösebetätiger 14' ist in dem Gehäuse 1 axial verschiebbar geführt, wobei sein Hub axial begrenzt ist.

Der Notlösebetätiger 14' wirkt von außerhalb des Gehäuses auf den Notlösestößel 14, wenn das Betätigungsende 14'b des Notlösebetätigers 14' mit einem geeigneten Werkzeug betätigt (gedrückt) wird.

In den anderen Figuren ist nur der Notlösestößel 14 ohne Notlösebetätiger 14' dargestellt.

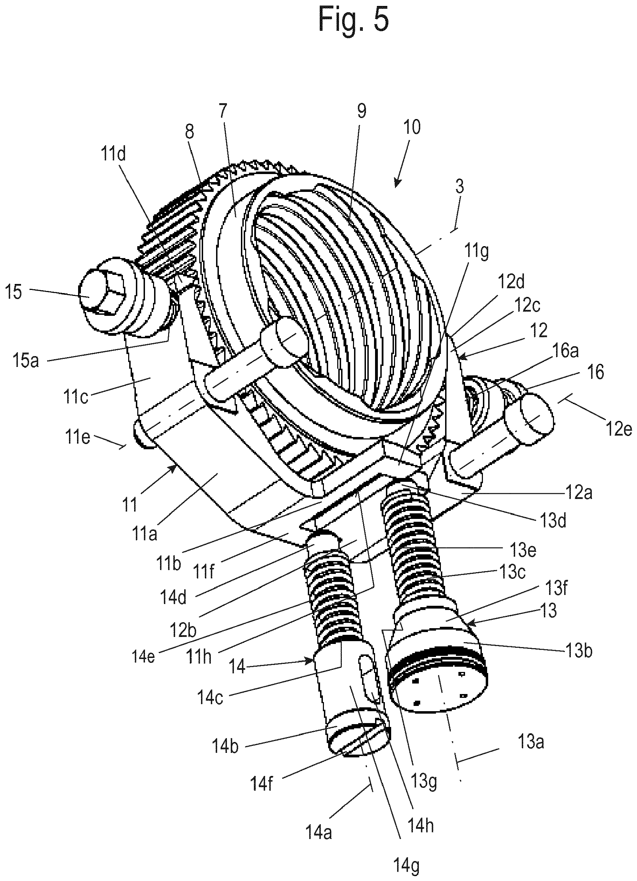

**Figur 5** zeigt eine schematische Perspektivansicht der Verriegelungsvorrichtung 10 des Ausführungsbeispiels nach Figur 1-2. **Figur 6** stellt die schematische Perspektivansicht der Verriegelungsvorrichtung 10 nach Figur 5 zusammen mit dem Verriegelungselement 17 aus einem anderen Blickwinkel dar.

Das Verriegelungselement 17 umfasst die Verriegelungselementachse 17a, einen zylindrischen Körper 17b, den zylindrischen Sperrabschnitt 17c, den Steuerabschnitt 17d und einen Federabschnitt 17e.

Der zylindrische Körper 17b weist an seinem freien Ende den Steuerabschnitt 17d auf. Das andere Ende ist mit einem Ende des zylindrischen Sperrabschnitt 17c verbunden. Ein Durchmesser des zylindrischen Körpers 17b korrespondiert mit der Breite des Führungsabschnitts 14h des Sperrkörpers 14g des Notlösestößels 14. Der Durchmesser des zylindrischen Sperrabschnitts 17c des Verriegelungselementes 17 ist hier etwa doppelt so groß wie der Durchmesser des zylindrischen Körpers 17b und korrespondiert mit der Einformung der Stufe 14i des Sperrkörpers 14g des Notlösestößels 14.

Das andere Ende des zylindrischen Sperrabschnitts 17c ist mit dem zylindrischen Federabschnitt 17e verbunden, welcher hier in etwa den Durchmesser des zylindrischen Körpers 17b aufweist. Das freie Ende des zylindrischen Federabschnitts 17e ist mit einer Führung 19 für eine Feder 18 versehen, die um den zylindrischen Federabschnitt 17e herum angeordnet ist und sich an dem anderen Ende des zylindrischen Sperrabschnitts 17c abstützt. Das freie Ende der Feder 18 wiederum stützt sich in einem Halteabschnitts 1c des Gehäuses 1b ab. Der Halteabschnitt 1c ist mit einer Aufnahme für die Feder 18 und den zylindrischen Sperrabschnitt 17c des Verriegelungselementes 17 versehen, welche mit dem Durchmesser des zylindrischen Sperrabschnitts 17c korrespondiert und diesen verschiebbar führt (Figur 2-2a).

Figur 2a zeigt den Steuerkolben 13 und den Notlösestößel 14 in ihrer jeweiligen Ruheposition. Weder der Steuerkolben 13 noch der Notlösestößel 14 sind betätigt.

In Figur 2b ist der gesperrte bzw. verriegelte Zustand des Notlösestößels 14 gezeigt, welcher seine Löseposition ist. Der Steuerkolben 13 steht im Gegensatz dazu in seiner Ruheposition. Dabei befindet sich die Verriegelungsvorrichtung 10 in der Lösestellung, weil der Notlösestößel 14 die Verriegelungsvorrichtung 10 in die Lösestellung verstellt hat und diese aufgrund der durch das Verriegelungselement 17 fixierten Löseposition des Notlösestößels 14 beibehalten wird.

In Figur 2c ist die Löseposition des Steuerkolbens 13 gezeigt. Der Notlösestö-ßel 14 steht im Gegensatz dazu in seiner Ruheposition. Dabei befindet sich die Verriegelungsvorrichtung 10 in der Lösestellung, weil der Steuerkolben 13 die Verriegelungsvorrichtung 10 in die Lösestellung verstellt hat.

Das Verriegelungselement 17 steht mit seinem Steuerabschnitt 17d in Kontakt mit dem kleineren Durchmesser der Steuerfläche 13g des konischen Steuerabschnitts 13f des Steuerkolbens 13. Der zylindrische Körper 17b des Verriegelungselementes 17 erstreckt sich durch den Führungsabschnitt 14h des Sperrkörpers 14g des Notlösestößels 14, wobei der Sperrabschnitt 17c in die Stufe 14i des Sperrkörpers 14g eingefallen ist und in der Aufnahme des Halteabschnitts 1c geführt ist. Die Feder 18 drückt das Verriegelungselement 17 und somit den Sperrabschnitt 17c in die Stufe 14i des Sperrkörpers 14g. Der Notlösestößel 14 ist somit axial fixiert. Die Lösestellung der Verriegelungsvorrichtung 10 wird beibehalten.

Wird nun der Steuerkolben 13 durch Steuerdruck betätigt, bewegt sich der Steuerkolben 13 in Richtung auf die Kolbenachse 3 nach oben. Dabei gleitet der Steuerabschnitt 17d des Verriegelungselementes 17 an der Steuerfläche 13g des Steuerabschnitts 13f des Steuerkolbens 13 von dem kleinen Durchmesser zu dem großen Durchmesser und wird auf diese Weise in Richtung auf den Notlösestößel 14 verschoben. Der Sperrabschnitt 17c wird in die Aufnahme des Halteabschnitts 1c gegen die Federkraft der Feder 18 geschoben und gerät außer Eingriff mit der Stufe 14i des Sperrblocks 14g des Notlösestößels 14. Nun ist der Notlösestößel 14 wieder axial frei beweglich, da seine Verriegelung aufgehoben ist, und wird durch seine Feder 14e wieder in seine Ruheposition nach unten verstellt. Damit ist der notgelöste Zustand zurückgesetzt und eine Verstellung der Verriegelungsvorrichtung 10 durch den Steuerkolben 13 ist wieder möglich.

Mit anderen Worten, das Verriegelungselement 17 ist durch den Kontakt seines Steuerabschnitts 17d mit der Steuerfläche 13g des konischen Steuerkörpers 13f des Steuerkolbens 13 in der Richtung seiner Verriegelungselementachse 17a in Abhängigkeit von der Position des Steuerkolbens 13 aus einer ersten Position, in der das Verriegelungselement 17den Notlösestößel 14 axial verriegelt, in eine zweite Position, in der das Verriegelungselement 17 den Notlösestößel 14 axial entriegelt, und zurück verstellbar.

Der Steuerkolben 13 und der Notlösestößel 14 sind so nebeneinander angeordnet, dass ihre Längsachsen, d.h. die Steuerachse 13a und die Notlöseachse 14a parallel zueinander und rechtwinklig zu der Kolbenachse 3 verlaufen.

Sowohl das Abtriebsende 13d des Steuerkolbens 13 als auch das Abtriebsende 14d des Notlösestößels 14 wirken in der Löseposition des Steuerkolbens 13 als auch in der Notlöseposition des Notlösestößels 14 jeweils mit dem Antriebsende 11b der ersten Sperrklinke 11 und dem Antriebsende 12b der zweiten Sperrklinke 12 zusammen. Dazu sind die Antriebsenden 11b und 12b hier unterschiedlich ausgebildet, was in Figur 5 deutlich zu erkennen ist.

Das Antriebsende 11b der ersten Sperrklinke 11 ist gabelförmig mit zwei Antriebsabschnitte 11f als Zinken und einem Abstand zwischen den Antriebsabschnitten 11f ausgebildet. Zwischen den Antriebsabschnitten 11f in ist das Antriebsende 12b der zweiten Sperrklinke 12 plattenförmig ausgebildet und zwischen den Antriebsabschnitten 11f angeordnet. Das Antriebsende 11b mit den Antriebsabschnitten 11f der ersten Sperrklinke 11 und das Antriebsende 12b der zweiten Sperrklinke 12 und somit die beiden Sperrklinken 11, 12 sind unabhängig voneinander bewegbar.

Das Abtriebsende 13d des Steuerkolbens 13 und das Abtriebsende 14d des Notlösestößels 14 wirken jeweils mit einem Antriebsabschnitt 11f der ersten Sperrklinke 11 und mit dem Antriebsabschnitt 12b der zweiten Sperrklinke 12 zusammen, wobei sie in den jeweiligen Lösepositionen jeweils mit einem Antriebsabschnitt 11f der ersten Sperrklinke 11 und mit dem Antriebsabschnitt 12b der zweiten Sperrklinke 12 in Kontakt stehen und die Sperrklinken 11, 12 um die jeweilige Schwenkachse 11e, 12e außer Eingriff mit der Verzahnung 8 der Gewindemutter 7 bringen.

Wenn sich die Verriegelungsvorrichtung 10 in dem Arretierungszustand befindet, d.h. die Sperrklinken 11, 12 mit der Verzahnung 8 der Gewindemutter 7 in Eingriff stehen, ist eine Feststellbremse oder Parkbremse in Funktion. Der Arretierungszustand der Verriegelungsvorrichtung 10 kann dann durch Beaufschlagen des Steuerkolbens 13 mit Steuerdruck in den Lösezustand verstellt werden. Dabei wird der Steuerkolben 13 aus seiner Ruheposition in seine Löseposition verstellt, wobei er die Sperrklinken 11, 12 mit seinem Abtriebsende 13d betätigt. Dann ist der Bremszylinder 1 für Betriebsbremsungen bereit.

Wird eine Notlösefunktion benötigt, wenn z.B. keine Steuerdruck für den Steuerkolben 13 vorhanden ist oder bei Verlust von Betätigungsenergie, kann der Notlösestößel 14 mittels Werkzeug verstellt (z.B. axial verschoben) werden. Dabei wird der Notlösestößel 14 aus seiner Ruheposition in seine Löseposition verstellt, wobei er die Sperrklinken 11, 12 mit seinem Abtriebsende 14d betätigt.

Zum Einnehmen des Arretierungszustands wird der Steuerkolben 13 nicht mehr mit Steuerdruck beaufschlagt. Dann wird der Steuerkolben 13 durch die Federkraft seiner Feder 13e aus seiner Löseposition in seine Ruheposition verstellt, wobei die Sperrklinken 11, 12 durch deren Federn 15a, 16a wieder in Eingriff mit der Verzahnung 8 der Gewindemutter 7 verstellt werden. Im Falle des Notlösestößels 14 wird dieser aus seiner Löseposition in seine Ruheposition zurückgestellt. Die Feder 14e des Notlösestößels 14 wirkt dabei unterstützend und bewirkt, dass der Notlösestößel 14 in seiner Ruheposition gehalten wird. Die Sperrklinken 11, 12 werden auch dabei wie oben beschrieben in Eingriff mit der Verzahnung 8 der Gewindemutter 7 gebracht.

Der Steuerkolben 13 und der Notlösestößel 14 sind funktionell getrennt. Der Notllösestößel 14 ist außerhalb eines Kraftflusses des Betriebsbremskolbens 2 angeordnet. Das Verriegelungselement 17 der Sperreinrichtung verriegelt den Notlösestößel 14 solange, bis das Verriegelungselement 17 von dem Steuerkolben 13 betätigt und der Notlösezustand dadurch rückgesetzt wird.

Der Notlösestößel wird also dauerhaft verriegelt, wodurch sichergestellt ist, dass der Notlösevorgang vollständig ablaufen kann. Die Notlösebetätigung liegt nicht im Kraftfluss der Parkbremse und dadurch treten geringere Notlösekräfte auf.

Die Erfindung ist durch das oben angegebene Ausführungsbeispiel nicht eingeschränkt, sondern im Rahmen der Ansprüche modifizierbar.

So ist z.B. denkbar, dass der Steuerkolben 13 durch eine Stelleinrichtung verstellbar ist. Eine solche Stelleinrichtung kann z.B. ein elektrischer, elektromechanischer, pneumatischer, hydraulischer Aktuator sein.

### Bezugszeichenliste

- 1: Bremszylinder
- 1a: Gehäuse
- 1b: Gehäuseabschnitt
- 1c: Halteabschnitt
- 2: Betriebsbremskolben
- 3: Kolbenachse
- 4: Bewegungsrichtung
- 5: Kolbenrohr
- 6: Gewindeabschnitt
- 7: Gewindemutter
- 8: Verzahnung
- 9: Gewinde
- 10: Verriegelungsvorrichtung
- 11, 12: Sperrklinke
- 11a, 12a: Hebelarm
- 11b, 12b: Antriebsende
- 11c, 12c: Hebelarm
- 11d, 12d: Klinkenende
- 11e, 12e: Schwenkachse
- 11f, 11g: Antriebsabschnitt
- 13: Steuerkolben
- 13a: Steuerachse
- 13b: Antriebsabschnitt
- 13c: Körper
- 13d: Abtriebsende
- 13e: Feder
- 13f: Steuerkörper
- 13g: Steuerfläche
- 14: Notlösestößel
- 14': Notlösebetätiger
- 14a: Notlöseachse
- 14b, 14'b: Betätigungsende
- 14c, 14'c: Körper
- 14d: Abtriebsende
- 14e: Feder
- 14f: Betätigungsabschnitt
- 14g: Sperrblock
- 14h: Führungsabschnitt
- 14i: Stufe
- 14j: Anschlag
- 15, 16: Federhalter
- 15a, 16a: Feder
- 17: Verriegelungselement
- 17a: Verriegelungselementachse
- 17b: Körper
- 17c: Sperrabschnitt
- 17d: Steuerabschnitt
- 17e: Federabschnitt
- 18: Feder
- 19: Führung

- AN: Aufnahmeraum
- AS: Anschlagelement
- DA: Druckanschluss
- DR: Druckraum
- GR: Gehäuseinnenraum
- KR: Kolbenraum
- SR: Steuerdruckraum
- ST: Steuerdruckanschluss

## Patentansprüche

1. Bremszylinder (1) mit einer Verriegelungsvorrichtung (10) zur mechanischen Bremskraftverriegelung, insbesondere für Schienenfahrzeuge, und mit einem innerhalb eines Gehäuses (1) axial bewegbaren Betriebsbremskolben (2), der durch Beaufschlagung mit einem Druckmedium bewegbar und mit einem Kolbenrohr (5) gekoppelt ist, wobei das Kolbenrohr (5) mit einem nicht selbsthemmenden Gewinde (9), das in Eingriff mit einer in dem Gehäuse (1) drehbar gelagerten Gewindemutter (7) steht, ausgebildet ist, wobei die Verriegelungsvorrichtung (10) mit einer Verzahnung (8) der Gewindemutter (7) zusammenwirkt,
wobei die Verriegelungsvorrichtung (10) eine oder mehrere Sperrklinke/n (11, 12), einen Steuerkolben (13), einen Notlösestößel (14) und ein Verriegelungselement (17) des Notlösestößels (14) umfasst,
**dadurch gekennzeichnet, dass** der Steuerkolben (13) und der Notlösestößel (14) parallel zueinander und dicht nebeneinander angeordnet sind, wobei eine Steuerachse (13a) des Steuerkolbens (13) und eine Notlöseachse (14a) des Notlösestößels (14) parallel zueinander und rechtwinklig zu einer Kolbenachse (3) des Bremszylinders (1) verlaufen.

2. Bremszylinder (1) nach Anspruch 1, **dadurch gekennzeichnet, dass** eine Längsachse des Verriegelungselementes (17) als Verriegelungselementachse (17a) rechtwinklig zu der Steuerachse (13a) des Steuerkolbens (13) und der Notlöseachse (14a) des Notlösestößels (14) verläuft und die Steuerachse (13a) des Steuerkolbens (13) und die Notlöseachse (14a) des Notlösestößels (14) schneidet.

3. Bremszylinder (1) nach einem der vorhergehenden Ansprüche, **dadurch gekennzeichnet, dass** das Verriegelungselement (17a) in Richtung seiner Verriegelungselementachse (17a) verschiebbar in einem Sperrblock (14h) des Notlösestößels (14) und einer Aufnahme eines Halteabschnitts (1c) eines Gehäuses (1) des Bremszylinders (1) geführt und durch eine Feder (18) in Richtung auf den Steuerkolben (13) vorgespannt ist.

4. Bremszylinder (1) nach einem der vorhergehenden Ansprüche, **dadurch gekennzeichnet, dass** eine Steuerfläche (13g) eines konischen Steuerkörpers (13f) des Steuerkolbens (13) in Kontakt mit einem Steuerabschnitt (17d) des Verriegelungselementes (17) steht.

5. Bremszylinder (1) nach Anspruch 4, **dadurch gekennzeichnet, dass** das Verriegelungselement (17) durch den Kontakt seines Steuerabschnitts (17d) mit der Steuerfläche (13g) des konischen Steuerkörpers (13f) des Steuerkolbens (13) in der Richtung seiner Verriegelungselementachse (17a) in Abhängigkeit von der Position des Steuerkolbens (13) aus einer ersten Position, in der das Verriegelungselement (17) den Notlösestößel (14) axial verriegelt, in eine zweite Position, in der das Verriegelungselement (17) den Notlösestößel (14) axial entriegelt, und zurück verstellbar ist.

6. Bremszylinder (1) nach einem der vorhergehenden Ansprüche, **dadurch gekennzeichnet, dass** das Verriegelungselement (17) einen Sperrabschnitt (17c) aufweist, welcher in der ersten Position des Verriegelungselementes (17) mit einer Stufe (14i) eines Sperrblocks (14g) des Notlösestößels (14) in einem verriegelten Zustand des Notlösestößels (14) in Eingriff steht und den Notlösestößel (14) axial verriegelt.

7. Bremszylinder (1) nach einem der vorhergehenden Ansprüche, **dadurch gekennzeichnet, dass** die mehreren Sperrklinke/n (11, 12) in Bezug auf eine Kolbenachse (3), zu welcher die Gewindemutter (7) koaxial angeordnet ist, an der Verzahnung (8) der Gewindemutter (7) radial gegenüberliegend angeordnet sind.

8. Bremszylinder (1) nach Anspruch 6 oder 7, **dadurch gekennzeichnet, dass** die mehreren Sperrklinke/n (11, 12) gleichzeitig durch sowohl den Steuerkolben (13) als auch durch den Notlösestößel (14) betätigbar sind.

9. Bremszylinder (1) nach Anspruch 8, **dadurch gekennzeichnet, dass** die Verriegelungsvorrichtung (10) aus einem Arretierungszustand, in welchem die mehreren Sperrklinke/n (11, 12) durch einen Eingriff mit der Verzahnung (8) der Gewindemutter (7) deren Verdrehung um die Kolbenachse (3) blockieren, wobei die mehreren Sperrklinken (11, 12) jeweils mittels einer Feder (15a, 16a) in Eingriff mit der Verzahnung (8) der Gewindemutter (7) gedrückt sind, in einen Lösezustand, in welchem die Sperrklinken (11, 12) außer Eingriff mit der Verzahnung (8) der Gewindemutter (7) stehen und die Gewindemutter (7) in ihrer Verdrehung nicht blockieren, mittels des Steuerkolbens (13) und/oder des Notlösestößels (14) verstellbar ist, wobei die Verriegelungsvorrichtung (10) durch Beaufschlagen des Steuerkolbens (13) mit Steuerdruck in den Lösezustand verstellt ist, oder wobei der Notlösestößel (14) mittels Werkzeug und/oder manuell aus einer Ruheposition in eine Löseposition verstellt ist und die mehreren Sperrklinken (11, 12) betätigt, wobei die Verriegelungsvorrichtung (10) aus dem Lösezustand in den Arretierungszustand mittels des Steuerkolbens (13) verstellbar ist, wenn der Steuerkolben (13) nach Beaufschlagung mit Druck anschließend wieder entlüftet wird, oder im Falle des Notlösestößels (14) dieser aus seiner Löseposition in seine Ruheposition zurückgestellt ist.

10. Bremszylinder (1) nach einem der vorhergehenden Ansprüche, **dadurch gekennzeichnet, dass** die mehreren Sperrklinke/n (11, 12) der Verriegelungsvorrichtung (10) unabhängig voneinander bewegbar sind.

11. Bremszylinder (1) nach einem der vorhergehenden Ansprüche, **dadurch gekennzeichnet, dass** der Steuerkolben (13) mit einem Druckmittel beaufschlagbar ist, und dass der Notlösestößel manuell oder/und mit einem Werkzeug verstellbar ist.

## Claims

1. Brake cylinder (1) comprising a locking device (10) for mechanical brake force locking, in particular for rail vehicles, and comprising a service brake piston (2) which can be axially moved inside a housing (1) and which can be moved by applying a pressure medium thereto, and which is coupled to a piston tube (5), wherein the piston tube (5) is provided with a non-self-locking thread (9) which is engaged with a threaded nut (7) which is rotatably mounted in the housing (1), wherein the locking device (10) cooperates with a toothing (8) of the threaded nut (7),
wherein the locking device (10) comprises one or more pawl(s) (11, 12), a control piston (13), an emergency release tappet (14) and a locking element (17) of the emergency release tappet (14),
**characterized in that** the control piston (13) and the emergency release tappet (14) are arranged parallel to one another and closely adjacent to one another, wherein a control axis (13a) of the control piston (13) and an emergency release axis (14a) of the emergency release tappet (14) run parallel to one another and at right angles to a piston axis (3) of the brake cylinder (1).

2. Brake cylinder (1) according to Claim 1, **characterized in that** a longitudinal axis of the locking element (17) as a locking element axis (17a) runs at right angles to the control axis (13a) of the control piston (13) and the emergency release axis (14a) of the emergency release tappet (14) and intersects the control axis (13a) of the control piston (13) and the emergency release axis (14a) of the emergency release tappet (14).

3. Brake cylinder (1) according to one of the preceding claims, **characterized in that** the locking element (17a) is displaceably guided in the direction of its locking element axis (17a) in a locking block (14h) of the emergency release tappet (14) and a receiver of a holding portion (1c) of a housing (1) of the brake cylinder (1) and is pretensioned by a spring (18) in the direction of the control piston (13).

4. Brake cylinder (1) according to one of the preceding claims, **characterized in that** a control surface (13g) of a conical control body (13f) of the control piston (13) is in contact with a control portion (17d) of the locking element (17).

5. Brake cylinder (1) according to Claim 4, **characterized in that** the locking element (17) is adjustable, by the contact of its control portion (17d) with the control surface (13g) of the conical control body (13f) of the control piston (13) in the direction of its locking element axis (17a) as a function of the position of the control piston (13), from a first position in which the locking element (17) axially locks the emergency release tappet (14) into a second position in which the locking element (17) axially unlocks the emergency release tappet (14), and back again.

6. Brake cylinder (1) according to one of the preceding claims, **characterized in that** the locking element (17) has an arresting portion (17c) which in the first position of the locking element (17) is engaged with a step (14i) of a locking block (14g) of the emergency release tappet (14) in a locked state of the emergency release tappet (14) and axially locks the emergency release tappet (14).

7. Brake cylinder (1) according to one of the preceding claims, **characterized in that** the plurality of pawls (11, 12) are arranged radially opposing one another on the toothing (8) of the threaded nut (7), relative to a piston axis (3) to which the threaded nut (7) is coaxially arranged.

8. Brake cylinder (1) according to Claim 6 or 7, **characterized in that** the plurality of pawls (11, 12) are able to be actuated at the same time both by the control piston (13) and by the emergency release tappet (14).

9. Brake cylinder (1) according to Claim 8, **characterized in that** the locking device (10) is adjustable by means of the control piston (13) and/or the emergency release tappet (14), from a blocking state in which by an engagement with the toothing (8) of the threaded nut (7) the plurality of pawls (11, 12) block the rotation thereof about the piston axis (3), wherein the plurality of pawls (11, 12) are respectively pushed by means of a spring (15a, 16a) into engagement with the toothing (8) of the threaded nut (7), into a release state in which the pawls (11, 12) are disengaged from the toothing (8) of the threaded nut (7), and do not block the threaded nut (7) in terms of its rotation, wherein the locking device (10) is adjusted into the release state by applying control pressure to the control piston (13), or wherein the emergency release tappet (14) is adjusted by means of a tool and/or manually from a resting position into a release position and actuates the plurality of pawls (11, 12), wherein the locking device (10) is adjustable from the release state into the blocking state by means of the control piston (13) if, after the application of pressure, the control piston (13) is subsequently vented again.

10. Brake cylinder (1) according to one of the preceding claims, **characterized in that** the plurality of pawls (11, 12) of the locking device (10) are movable independently of one another.

11. The brake cylinder (1) according to one of the preceding claims, **characterized in that** a pressure medium is able to be applied to the control piston (13) and **in that** the emergency release tappet is adjustable manually and/or by the use of a tool.

## Revendications

1. Cylindre (1) de frein comprenant un dispositif (10) de verrouillage pour le verrouillage mécanique de la force de freinage, notamment pour des véhicules ferroviaires, et comprenant un piston (2) de frein de service, qui peut être déplacé axialement dans une enveloppe (1), qui peut être déplacé par alimentation en un fluide sous pression et qui est accouplé à un tube (5) de piston, dans lequel le tube (5) de piston est constitué en ayant un filetage (9), qui ne se bloque pas automatiquement et qui est en prise avec un écrou (7) fileté, monté tournant dans l'enveloppe (1), le dispositif (10) de verrouillage coopérant avec une denture (8) de l'écrou (7) fileté,
dans lequel le dispositif (10) de verrouillage comprend un ou plusieurs cliquets (11, 12) d'arrêt, un piston (13) de commande, un poussoir (14) de desserrage de secours et un élément (17) de verrouillage du poussoir (14) de desserrage de secours,
**caractérisé en ce que** le piton (13) de commande et le poussoir (14) de desserrage de secours sont montés en étant parallèles l'un à l'autre et étroitement l'un à côté de l'autre, dans lequel un axe (13a) de commande du piston (13) de commande et un axe (14a) de desserrage de secours du piston (14) de desserrage de secours s'étendent parallèlement l'un à l'autre à angle droit par rapport à un axe (3) du piston du cylindre (1) de frein.

2. Cylindre (1) de frein suivant la revendication 1, **caractérisé en ce qu'**un axe longitudinal de l'élément (17) de verrouillage s'étend comme axe (17a) d'élément de verrouillage à angle droit par rapport à l'axe (13a) du piston (13) de commande et à l'axe (14a) de desserrage de secours du piston (14) de desserrage de secours, et l'axe (13a) du piston (13) de commande et l'axe (14a) de desserrage de secours du piston (14) de desserrage de secours se coupent.

3. Cylindre (1) de frein suivant l'une des revendications précédentes, **caractérisé en ce que** l'élément (17a) de verrouillage passe, avec possibilité de coulisser dans la direction de son axe (17a) d'élément de verrouillage, dans un bloc (14h) d'arrêt du piston (14) de desserrage de secours et dans un évidement d'une partie (1c) de maintien d'une enveloppe (1) du cylindre (1) de frein et est précontraint par un ressort (18) dans le sens allant vers le piston (13) de commande.

4. Cylindre (1) de frein suivant l'une des revendications précédentes, **caractérisé en ce que** la surface (13g) de commande d'un corps (13f) conique de commande du piston (13) de commande est en contact avec une partie (17d) de commande de l'élément (17) de verrouillage.

5. Cylindre (1) de frein suivant la revendication 4, **caractérisé en ce que** l'élément (17) de verrouillage est réglable et en retour par le contact de sa partie (17d) de commande avec la surface (13g) de commande du corps (13f) conique de commande du piston (13) de commande dans la direction de son axe (17a) d'élément de verrouillage en fonction de la position du piston (13) de commande d'une première position, dans laquelle l'élément (17) de verrouillage verrouille axialement le poussoir (14) de desserrage de secours, à une deuxième position, dans laquelle l'élément (17) de verrouillage déverrouille axialement le poussoir (14) de desserrage de secours.

6. Cylindre (1) de frein suivant l'une des revendications précédentes, **caractérisé en ce que** l'élément (17) de verrouillage a une partie (17c) d'arrêt qui, dans la première position de l'élément (17) de verrouillage est en prise avec un gradin (14i) d'un bloc (14g) d'arrêt du poussoir (14) de desserrage de secours, dans un état verrouillé du poussoir (14) de desserrage de secours, et verrouille axialement le poussoir (14) de desserrage de secours.

7. Cylindre (1) de frein suivant l'une des revendications précédentes, **caractérisé en ce que** les plusieurs cliquets (11, 12) d'arrêt sont, par rapport à un axe (3) du piston, par rapport auquel l'écrou (7) fileté est monté coaxialement, disposés en étant en opposition radialement sur la denture (8) de l'écrou (7) fileté.

8. Cylindre (1) de frein suivant la revendication 6 ou 7, **caractérisé en ce que** les plusieurs cliquets (11, 12) d'arrêt peuvent être actionnés en même temps tant par le piston (13) de commande qu'également par le poussoir (14) de desserrage de secours.

9. Cylindre (1) de frein suivant la revendication 8, **caractérisé en ce que** le dispositif (10) de verrouillage peut, au moyen du piston (13) de commande et/ou du poussoir (14) de desserrage de secours, passer d'un état d'arrêt, dans lequel les plusieurs cliquets (11, 12) d'arrêt bloquent, par une prise avec la denture (8) de l'écrou (7) fileté, sa rotation autour de l'axe (3) du piston, dans lequel les plusieurs cliquets (11, 12) d'arrêt étant poussés respectivement au moyen d'un ressort (15a, 16a) en prise avec la denture (8) de l'écrou (7) fileté à un état de desserrage, dans lequel les cliquets (11, 12) d'arrêt sont hors de prise avec la denture (8) de l'écrou (7) fileté et ne bloquent pas l'écrou (7) fileté dans sa rotation, dans lequel le dispositif (10) de verrouillage est mis dans l'état de desserrage en soumettant le piston (13) de commande à une pression de commande, ou dans lequel le poussoir (14) de desserrage de secours passe, à l'aide d'un outil et/ou manuellement, d'une position de repos à une position de desserrage et actionne les plusieurs cliquets (11, 12) d'arrêt, dans lequel le dispositif (10) de verrouillage peut passer de l'état de desserrage à la position d'arrêt au moyen du piston (13) de commande, lorsque le piston (13) de commande est, après avoir été soumis à une pression, remis ensuite à l'atmosphère, ou dans le cas où le poussoir (14) de desserrage de secours ramène celui-ci de sa position de desserrage à sa position de repos.

10. Cylindre (1) de frein suivant l'une des revendications précédentes, **caractérisé en ce que** les plusieurs cliquets (11, 12) d'arrêt du dispositif (10) de verrouillage peuvent être déplacés indépendamment les uns des autres.

11. Cylindre (1) de frein suivant l'une des revendications précédentes, **caractérisé en ce que** le piston (13) de commande peut être alimenté en un fluide sous pression, et **en ce que** le poussoir de desserrage de secours peut être déplacé manuellement ou/et par un outil.
